# EUROPEAN PATENT APPLICATION

(11) **EP 3 901 726 A1**
(43) Date of publication of application: **27.10.2021**
(21) Application number: 19910233.6
(22) Date of filing: 27.12.2019
(51) Int. Cl.: G05D 1/10

(54) **TRAVEL ROUTE DETERMINATION METHOD AND RELATED DEVICE**

(30) Priority: 14.01.2019 CN 201910038799
(71) Applicant: HUAWEI TECHNOLOGIES CO., LTD., Shenzhen, Guangdong 518129 (CN)
(72) Inventor: XU, Shengfeng, Shenzhen, Guangdong 518129 (CN); YANG, Yanmei, Shenzhen, Guangdong 518129 (CN)
(74) Representative: Isarpatent
(86) International application number: PCT/CN2019/129486
(87) International publication number: WO 2020/147560

(57) **Abstract**

A trajectory determining method and a related device are provided. The method includes: A service control entity receives a first request (S301), where the first request includes at least one of a destination of a terminal, a departure point of the terminal, and a communication requirement of the terminal. The service control entity determines at least one trajectory (S304). The service control entity sends the at least one trajectory (S305), where the at least one trajectory is used to indicate a trajectory of the terminal. According to the method, normal flight of an uncrewed aerial vehicle can be ensured.

## Description

### TECHNICAL FIELD

This application relates to the field of wireless communications technologies, and in particular, to a trajectory determining method and a related device.

### BACKGROUND

An uncrewed aerial vehicle (unmanned aerial vehicle, UAV) is a kind of uncrewed aircraft with autonomous power, which can perform a variety of tasks through manual control or autopilot. As R&D technologies of uncrewed aerial vehicles become mature, manufacturing costs are greatly reduced, and the uncrewed aerial vehicles are widely used in various fields, including agricultural plant protection, electric power inspection, police law enforcement, geological exploration, environmental monitoring, forest fire prevention, aerial photography for movie/TV, and the like. The uncrewed aerial vehicles may use services of mobile cellular communication and management and control. A mobile cellular network has advantages such as a wide coverage area, a large system capacity, comprehensive supported service types, strong anti-interference performance, and has features such as a plurality of high-precision positioning technologies. Therefore, a mobile communications network may provide services for communication and management and control of the uncrewed aerial vehicles. During a flight process, a flying networked uncrewed aerial vehicle needs to report status information in real time and receive a broadcast alarm notification message in real time.

However, current planning of a trajectory for an uncrewed aerial vehicle does not take the following aspects into consideration: a requirement of uncrewed aerial systems traffic management (unmanned aerial systems traffic management, UTM) on an air route of the uncrewed aerial vehicle, and an impact brought by network capabilities such as cellular network coverage and load to data transmission of the uncrewed aerial vehicle during a flight process. Consequently, normal flight of the uncrewed aerial vehicle cannot be ensured.

### SUMMARY

Embodiments of this application provide a trajectory determining method and a related device, to ensure normal flight of an uncrewed aerial vehicle.

According to a first aspect, an embodiment of this application provides a trajectory determining method, including: A service control entity first receives a first request, where the first request includes at least one of a destination of a terminal, a departure point of the terminal, and a communication requirement of the terminal, determines at least one trajectory, and then sends the at least one trajectory, where the at least one trajectory is used to indicate a trajectory of the terminal. The at least one trajectory is determined by using the at least one of the destination of the terminal, the departure point of the terminal, and the communication requirement of the terminal, to ensure that the determined trajectory meets a flight requirement and a communication requirement. Consequently, normal flight of an uncrewed aerial vehicle can be implemented.

In a possible design, the service control entity obtains capability information of an access network, and determines the at least one trajectory based on the at least one of the destination of the terminal, the departure point of the terminal, and the communication requirement of the terminal that are carried in the first request, and the capability information of the access network. This prevents a UAV from flying into a coverage hole or a traffic busy zone, and ensures an air communication requirement during a flight process. Consequently, normal flight of the UAV can be implemented.

In another possible design, the service control entity first sends a second request to a network management entity, and then receives the capability information of the access network sent by the network management entity, where the capability information of the access network includes at least one of a coverage capability and a load capability.

In another possible design, the service control entity first obtains a first flight zone and capability information of an access network, and then determines the at least one trajectory based on the at least one of the destination of the terminal, the departure point of the terminal, and the communication requirement of the terminal that are carried in the first request, the capability information of the access network, and the first flight zone. This not only ensures that a trajectory of the UAV meets an airspace management requirement and avoids a no-fly zone, but also prevents the UAV from flying into a coverage hole or a traffic busy zone, to ensure an air communication requirement during a flight process. Consequently, normal flight of the UAV can be implemented.

In another possible design, the capability information of the access network includes at least one of a coverage capability and a load capability. The coverage capability may include a coverage area (for example, a longitude, a latitude, and a height) and a communication capability (for example, a communication rate and a bandwidth), and the load capability may include a cell traffic volume, an available radio resource, and the like.

In another possible design, the service control entity receives the first request sent by an uncrewed aerial vehicle server, where the first request includes the first flight zone. The at least one trajectory is determined by using the first flight zone, so as to ensure that the trajectory of the UAV meets the airspace management requirement and avoids the no-fly zone.

In another possible design, the first request further includes a preset trajectory. The service control entity determines whether the preset trajectory meets a flight requirement. When the preset trajectory does not meet the flight requirement, the service control entity determines the at least one trajectory.

In another possible design, the service control entity may determine, based on the at least one of the destination of the terminal, the departure point of the terminal, and the communication requirement of the terminal that are carried in the first request, the capability information of the access network, and the first flight zone, whether the preset trajectory meets the flight requirement.

In another possible design, if the service control entity cannot determine the at least one trajectory based on the at least one of the destination of the terminal, the departure point of the terminal, and the communication requirement of the terminal that are carried in the first request, the capability information of the access network, or the first flight zone, the service control entity may send an indication message to the terminal via the uncrewed aerial vehicle server or a mobility management entity. The indication message is used to notify the UAV that determining of the trajectory fails. After receiving the indication message, the UAV may reduce a communication requirement during a flight process, and resend the first request.

In another possible design, after receiving the first request, the service control entity may send a third request to the uncrewed aerial vehicle server, where the third request is used to request the first flight zone.

In another possible design, after receiving the first request, the service control entity may determine, based on a message purpose and a terminal type that are carried in the first request, whether to send the third request. If the message purpose is to request a trajectory and the terminal type is UAV, the service control entity sends the third request to the uncrewed aerial vehicle server.

In another possible design, the service control entity may be an uncrewed aerial vehicle service control entity.

According to a second aspect, an embodiment of this application provides a trajectory determining method, including: A network management entity receives a first request, where the first request includes at least one of a destination of a terminal, a departure point of the terminal, and a communication requirement of the terminal, and then determines at least one trajectory, and finally sends the at least one trajectory, where the at least one trajectory is used to indicate a trajectory of the terminal. The at least one trajectory is determined by using the at least one of the destination of the terminal, the departure point of the terminal, and the communication requirement of the terminal, to ensure that the determined trajectory meets a flight requirement and a communication requirement. Consequently, normal flight of an uncrewed aerial vehicle can be implemented.

In another possible design, the network management entity may obtain capability information of an access network, and determine the at least one trajectory based on the at least one of the destination of the terminal, the departure point of the terminal, and the communication requirement of the terminal that are carried in the first request, and the capability information of the access network. This prevents a UAV from flying into a coverage hole or a traffic busy zone, and ensures an air communication requirement during a flight process. Consequently, normal flight of the UAV can be implemented.

In another possible design, the network management entity may obtain a first flight zone and capability information of an access network, and determine the at least one trajectory based on the at least one of the destination of the terminal, the departure point of the terminal, and the communication requirement of the terminal that are carried in the first request, the capability information of the access network, and the first flight zone. This not only ensures that a trajectory of the UAV meets an airspace management requirement and avoids a no-fly zone, but also prevents the UAV from flying into a coverage hole or a traffic busy zone, to ensure an air communication requirement during a flight process. Consequently, normal flight of the UAV can be implemented.

According to a third aspect, an embodiment of this application provides a trajectory determining method, including: An uncrewed aerial vehicle server first receives a first request, where the first request includes at least one of a destination of a terminal, a departure point of the terminal, and a communication requirement of the terminal, and then sends a first message, where the first message is used to determine at least one trajectory. The at least one trajectory is determined by using the at least one of the destination of the terminal, the departure point of the terminal, and the communication requirement of the terminal, to ensure that the determined trajectory meets a flight requirement and a communication requirement. Consequently, normal flight of an uncrewed aerial vehicle can be implemented.

In a possible design, the uncrewed aerial vehicle server may send the first message to a service control entity, where the first message is used to indicate the service control entity to determine the at least one trajectory; the uncrewed aerial vehicle server sends the first message to a service control entity via a capability exposure network element, where the first message is used to indicate the service control entity to determine the at least one trajectory; the uncrewed aerial vehicle server sends the first message to a network management entity, where the first message is used to indicate the network management entity to determine the at least one trajectory; or the uncrewed aerial vehicle server sends the first message to a network management entity via a service control entity, where the first message is used to indicate the network management entity to determine the at least one trajectory.

In another possible design, the uncrewed aerial vehicle server obtains a second flight zone, and determines a first flight zone based on the at least one of the destination of the terminal, the departure point of the terminal, and the communication requirement of the terminal that are carried in the first request, and the second flight zone, where the first flight zone is included in the second flight zone. The at least one trajectory is determined by using the determined first flight zone, to ensure that a trajectory of a UAV meets an airspace management requirement and avoids a no-fly zone.

In another possible design, the first message includes the first flight zone.

In another possible design, after receiving the first request, the uncrewed aerial vehicle server may determine, based on a message purpose and a terminal type that are carried in the first request, whether to send the first message. If the message purpose is to request a trajectory and the terminal type is UAV, the uncrewed aerial vehicle server sends the first message.

In another possible design, the uncrewed aerial vehicle server sends a second message to the service control entity, or sends a second message to the service control entity via the capability exposure network element. The second message is used to notify the service control entity that selection of one trajectory from the at least one trajectory succeeds.

In another possible design, the second message may include a route identifier corresponding to the selected trajectory. The service control entity may obtain the trajectory of the UAV based on the route identifier, and then may help the UAV perform network access and network handover during a flight process.

According to a fourth aspect, an embodiment of this application provides a trajectory determining method, including: A terminal first sends a first request, where the first request includes at least one of a destination of the terminal, a departure point of the terminal, and a communication requirement of the terminal, and the first request is used to indicate a service control entity, an uncrewed aerial vehicle server, or a network management entity to determine at least one trajectory. Then the terminal receives a first message, where the first message includes the at least one trajectory. The at least one trajectory is determined by using the at least one of the destination of the terminal, the departure point of the terminal, and the communication requirement of the terminal, to ensure that the determined trajectory meets a flight requirement and a communication requirement. Consequently, normal flight of an uncrewed aerial vehicle can be implemented.

In a possible design, the terminal sends the first request to the service control entity via a mobility management entity, where the first request is used to indicate the service control entity to determine the at least one trajectory.

In another possible design, the terminal sends the first request to the service control entity via the uncrewed aerial vehicle server, where the first request is used to indicate the service control entity to determine the at least one trajectory.

In another possible design, the terminal selects one trajectory from the at least one trajectory.

In another possible design, the terminal first obtains a length of each trajectory in the at least one trajectory, and selects a trajectory with a shortest length from the at least one trajectory, to implement shortest-distance flight.

In another possible design, the terminal may alternatively obtain signal strength of each trajectory in the at least one trajectory, and select a trajectory with highest signal strength from the at least one trajectory based on the signal strength of each trajectory in the at least one trajectory. In this way, communication quality of the UAV during flight is ensured.

In another possible design, the terminal may receive route information, where the route information may include the length and the signal strength of each trajectory.

In another possible design, when none of the at least one trajectory can meet a flight requirement of the terminal, the terminal may send a second message to the service control entity, the uncrewed aerial vehicle server, or the network management entity, where the second message is used to notify the service control entity, the uncrewed aerial vehicle server, or the network management entity that selection of one trajectory from the at least one trajectory fails. In this case, the service control entity, the uncrewed aerial vehicle server, or the network management entity may re-determine at least one trajectory and send the at least one trajectory to the terminal, to ensure that the terminal has an available trajectory. Alternatively, after receiving the second message, the UAV may reduce the flight requirement, and resend the first request.

In another possible design, the terminal may send the second message to the service control entity via the mobility management entity. The second message is used to notify the service control entity that selection of one trajectory from the at least one trajectory succeeds. The second message may include a route identifier corresponding to the selected trajectory. The service control entity may obtain the trajectory of the UAV based on the route identifier, and help the UAV perform network access and network handover during a flight process.

According to a fifth aspect, an embodiment of this application provides a service control entity. The service control entity is configured to implement the method and the functions performed by the service control entity in the first aspect, and is implemented by hardware/software. The hardware/software includes modules corresponding to the foregoing functions.

According to a sixth aspect, an embodiment of this application provides a network management entity. The network management entity is configured to implement the method and the functions performed by the network management entity in the first aspect, and is implemented by hardware/software. The hardware/software includes modules corresponding to the foregoing functions.

According to a seventh aspect, an embodiment of this application provides an uncrewed aerial vehicle server. The uncrewed aerial vehicle server is configured to implement the method and the functions performed by the uncrewed aerial vehicle server in the second aspect, and is implemented by hardware/software. The hardware/software includes modules corresponding to the foregoing functions.

According to an eighth aspect, an embodiment of this application provides a terminal. The terminal is configured to implement the method and the functions performed by the terminal in the third aspect, and is implemented by hardware/software. The hardware/software includes modules corresponding to the foregoing functions.

According to a ninth aspect, an embodiment of this application provides another service control entity, including a processor, a memory, and a communications bus. The communications bus is configured to implement connection and communication between the processor and the memory, and the processor executes a program stored in the memory to implement steps in the trajectory determining method provided in the first aspect.

In a possible design, the service control entity provided in this application may include a corresponding module configured to perform behavior of the service control entity in the foregoing method designs. The module may be software and/or hardware.

According to a tenth aspect, an embodiment of this application provides another network management entity, including a processor, a memory, and a communications bus. The communications bus is configured to implement connection and communication between the processor and the memory, and the processor executes a program stored in the memory to implement steps in the trajectory determining method provided in the second aspect.

In a possible design, the network management entity provided in this application may include a corresponding module configured to perform behavior of the network management entity in the foregoing method designs. The module may be software and/or hardware.

According to an eleventh aspect, this application provides another uncrewed aerial vehicle server, including a processor, a memory, and a communications bus. The communications bus is configured to implement connection and communication between the processor and the memory, and the processor executes a program stored in the memory to implement steps in the trajectory determining method provided in the second aspect.

In a possible design, the uncrewed aerial vehicle server provided in this application may include a corresponding module configured to perform behavior of the uncrewed aerial vehicle server in the foregoing method designs. The module may be software and/or hardware.

According to a twelfth aspect, this application provides another terminal, including a processor, a memory, and a communications bus. The communications bus is configured to implement connection and communication between the processor and the memory, and the processor executes a program stored in the memory to implement steps in the trajectory determining method provided in the third aspect.

In a possible design, the terminal provided in this application may include a corresponding module configured to perform behavior of the terminal in the foregoing method designs. The module may be software and/or hardware.

According to a thirteenth aspect, an embodiment of this application provides a communications system. The system includes a network management entity, a service control entity, and an uncrewed aerial vehicle server. The uncrewed aerial vehicle server sends a first request to the service control entity, where the first request includes at least one of a destination of a terminal, a departure point of the terminal, and a communication requirement of the terminal. After receiving the first request, the service control entity sends a second request to the network management entity, and the network management entity returns capability information of an access network to the service control entity. The service control entity determines at least one trajectory based on the at least one of the destination of the terminal, the departure point of the terminal, and the communication requirement of the terminal that are carried in the first request, and the capability information of the access network. This ensures that the determined trajectory meets a flight requirement and a communication requirement. Consequently, normal flight of an uncrewed aerial vehicle can be implemented.

In a possible design, the system further includes the terminal. The terminal sends a trajectory request to the uncrewed aerial vehicle server, receives the at least one trajectory, and selects one trajectory from the at least one trajectory.

In another possible design, the system further includes a capability exposure network element. The uncrewed aerial vehicle server may interact with the service control entity via the capability exposure network element.

According to a fourteenth aspect, an embodiment of this application provides a communications system. The system includes a network management entity, a service control entity, and a terminal. The terminal sends a first request to the service control entity, where the first request includes at least one of a destination of the terminal, a departure point of the terminal, and a communication requirement of the terminal. After receiving the first request, the service control entity sends a second request to the network management entity, and the network management entity returns capability information of an access network to the service control entity. The service control entity determines at least one trajectory based on the at least one of the destination of the terminal, the departure point of the terminal, and the communication requirement of the terminal that are carried in the first request, and the capability information of the access network. This ensures that the determined trajectory meets a flight requirement and a communication requirement. Consequently, normal flight of an uncrewed aerial vehicle can be implemented.

In a possible design, the system further includes an uncrewed aerial vehicle server. The uncrewed aerial vehicle server may receive a third request sent by the service control entity, obtain a second flight zone, determine a first flight zone based on the at least one of the destination of the terminal, the departure point of the terminal, and the communication requirement of the terminal that are carried in the third request, and the second flight zone, and return the first flight zone to the service control entity. In this way, the at least one trajectory is determined by using the determined first flight zone, to ensure that a trajectory of a UAV meets an airspace management requirement and avoids a no-fly zone.

In another possible design, the system further includes an access and mobility management function network element. The terminal may interact with the service control entity via the access and mobility management function network element.

In another possible design, the system further includes a capability exposure network element. The uncrewed aerial vehicle server may interact with the service control entity via the capability exposure network element.

According to a fifteenth aspect, an embodiment of this application provides a communications system. The system includes a network management entity, a service control entity, an uncrewed aerial vehicle server, and a terminal. The service control entity is configured to perform the method and the functions performed by the service control entity in the first aspect. The network management entity is configured to perform the method and the functions performed by the network management entity in the second aspect. The uncrewed aerial vehicle server is configured to perform the method and the functions performed by the uncrewed aerial vehicle server in the third aspect. The terminal is configured to perform the method and the functions performed by the terminal in the fourth aspect.

According to a sixteenth aspect, an embodiment of this application provides a route determining method. In the method, an uncrewed aerial vehicle server sends a first request to a service control entity, where the first request includes at least one of a destination of a terminal, a departure point of the terminal, and a communication requirement of the terminal. After receiving the first request, the service control entity sends a second request to a network management entity, and the network management entity returns capability information of an access network to the service control entity. The service control entity determines at least one trajectory based on the at least one of the destination of the terminal, the departure point of the terminal, and the communication requirement of the terminal that are carried in the first request, and the capability information of the access network. The method can ensure that the determined trajectory meets a flight requirement and a communication requirement. Consequently, normal flight of an uncrewed aerial vehicle can be implemented. In the method, the terminal may further send a trajectory request to the uncrewed aerial vehicle server, receive the at least one trajectory, and select one trajectory from the at least one trajectory.

According to a seventeenth aspect, an embodiment of this application provides a route determining method. In the method, a terminal sends a first request to a service control entity, where the first request includes at least one of a destination of the terminal, a departure point of the terminal, and a communication requirement of the terminal. After receiving the first request, the service control entity sends a second request to a network management entity, and the network management entity returns capability information of an access network to the service control entity. Finally, the service control entity determines at least one trajectory based on the at least one of the destination of the terminal, the departure point of the terminal, and the communication requirement of the terminal that are carried in the first request, and the capability information of the access network. The method can ensure that the determined trajectory meets a flight requirement and a communication requirement. Consequently, normal flight of an uncrewed aerial vehicle can be implemented. In the method, an uncrewed aerial vehicle server may further receive a third request sent by the service control entity, obtain a second flight zone, determine a first flight zone based on the at least one of the destination of the terminal, the departure point of the terminal, and the communication requirement of the terminal that are carried in the third request, and the second flight zone, and return the first flight zone to the service control entity. In this way, the at least one trajectory is determined by using the determined first flight zone, to ensure that a trajectory of a UAV meets an airspace management requirement and avoids a no-fly zone.

According to an eighteenth aspect, an embodiment of this application provides a route determining method. In the method, a service control entity is configured to perform the method and the functions performed by the service control entity in the first aspect, and a network management entity may be configured to perform the method and the functions performed by the network management entity in the second aspect. An uncrewed aerial vehicle server may be configured to perform the method and the functions performed by the uncrewed aerial vehicle server in the third aspect. A terminal may be configured to perform the method and the functions performed by the terminal in the fourth aspect.

According to a nineteenth aspect, this application provides a computer-readable storage medium. The computer-readable storage medium stores instructions. When the instructions are run on a computer, the computer is enabled to perform the methods in the foregoing aspects.

According to a twentieth aspect, this application provides a computer program product including instructions. When the computer program product runs on a computer, the computer is enabled to perform the methods in the foregoing aspects.

### BRIEF DESCRIPTION OF DRAWINGS

To describe technical solutions in embodiments of this application or in the background more clearly, the following describes the accompanying drawings for describing the embodiments of this application or the background.
FIG. 1 is a schematic diagram of a network architecture of a communications system;
FIG. 2 is a schematic diagram of a network architecture of another communications system according to an embodiment of this application;
FIG. 3 is a schematic flowchart of a trajectory determining method according to an embodiment of this application;
FIG. 4 is a schematic diagram of a flight zone according to an embodiment of this application;
FIG. 5 is a schematic flowchart of another trajectory determining method according to an embodiment of this application;
FIG. 6 is a schematic structural diagram of a service control entity according to an embodiment of this application;
FIG. 7 is a schematic structural diagram of a network management entity according to an embodiment of this application;
FIG. 8 is a schematic structural diagram of an uncrewed aerial vehicle server according to an embodiment of this application;
FIG. 9 is a schematic structural diagram of a terminal according to an embodiment of this application;
FIG. 10 is a schematic structural diagram of another service control entity according to an embodiment of this application;
FIG. 11 is a schematic structural diagram of another network management entity according to an embodiment of this application;
FIG. 12 is a schematic structural diagram of another uncrewed aerial vehicle server according to an embodiment of this application; and
FIG. 13 is a schematic structural diagram of another terminal according to an embodiment of this application.

### DESCRIPTION OF EMBODIMENTS

The following describes embodiments of this application with reference to the accompanying drawings in the embodiments of this application.

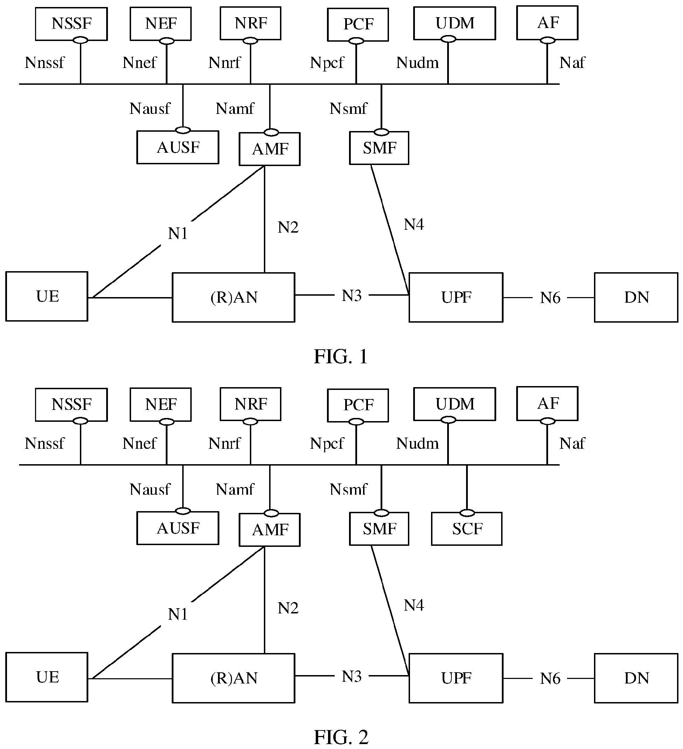

FIG. 1 is a schematic diagram of a network architecture of a communications system. The communications system may be a 5G system, and mainly includes network functions and entities such as a terminal (user equipment, UE), a (radio) access network device ((radio) access network, (R)AN), a user plane function (user plane function, UPF), a data network (data network, DN), an access and mobility management function (access and mobility management function, AMF) network element, a session management function (session management function, SMF), a policy control function (policy control function, PCF) network element, an application function (application function, AF) network element, a network slice selection function (network slice selection function, NSSF), an authentication service function (authentication server function, AUSF) network element, a unified data repository (unified data repository, UDM), and a capability exposure (network exposure function, NEF) network element.

The terminal may be user equipment, a handheld terminal, a notebook computer, a cellular phone, a smartphone, a tablet computer, a handheld device, a machine type communications terminal, or another device that can access a network. The terminal and the access network device communicate with each other by using a particular air interface technology. In this embodiment of this application, the terminal may be an uncrewed aerial vehicle or a controller of an uncrewed aerial vehicle. The (R)AN is mainly responsible for functions on an air interface side, such as radio resource management, quality of service management, and data compression and encryption. The access network device may include various forms of base stations, such as a macro base station, a micro base station, a relay node, and an access point. In systems using different radio access technologies, names of devices having base station functions may be different. For example, in a 5G system, the access network device is referred to as a gNB. The AMF is a core network element and is mainly responsible for signaling processing, for example, functions such as access control, mobility management, attachment and detachment, and gateway selection. If the AMF provides a service for a session in the terminal device, the AMF provides a control plane storage resource for the session, for example, to store a session identifier and an SMF network element identifier associated with the session identifier. The SMF is mainly responsible for selection or redirection of a user plane network element, internet protocol (internet protocol, IP) address assignment, or bearer establishment, modification, and release, or quality of service (quality of service, QoS) flow control. The UPF is mainly responsible for forwarding and receiving user data in the terminal device. The UPF may receive the user data from the data network, and transmit the user data to the terminal device via the access network device. The UPF network element may further receive the user data from the terminal device via the access network device, and forward the user data to the data network. The UPF has a transmission resource and a scheduling function that serve the terminal device and that are managed and controlled by the SMF. The NEF mainly supports secure interaction between a 3rd generation partnership project (3rd generation partnership project, 3GPP) network and a third-party application. The NEF may securely expose a network capability and an event to a third party, to enhance or improve application service quality. The 3GPP network can also securely obtain related data from the third party, to enhance intelligent network decision-making. In addition, the NEF supports restoring structured data from the unified data repository or storing structured data in the unified data repository. The AF mainly supports interaction with the 3GPP network to provide a service, for example, a service that affects a data routing decision or a policy control function, or some third-party services provided for a network side.

It should be noted that, in FIG. 1, the network functions and entities may exchange messages through different interfaces. For example, the UE and the AMF may interact with each other through an N1 interface, and an exchanged message is referred to as an N1 Message. A part of interfaces are implemented as service-oriented interfaces. The UE, the (R)AN, the UPF, and the DN in FIG. 1 may be referred to as network functions and entities on a data plane, and are configured to carry service data. User-layer data traffic may be transmitted by using a PDU session established between the UE and the DN, and passes through two network functional entities, the (R)AN and the UPF. Other network functions and entities may be collectively referred to as network functions and entities on a control plane, and are configured to carry signaling messages and are mainly responsible for functions such as authentication and authorization, registration management, session management, mobility management, and policy control, to ensure reliability and stability of user-layer data traffic transmission.

FIG. 2 is a schematic diagram of a network architecture of another communications system according to an embodiment of this application. As shown in the figure, a service control entity (server control function, SCF) is added to a network architecture of an existing communications system, and is configured to process uncrewed aerial vehicle services. The SCF may be an uncrewed aerial vehicle control entity (UAV control function, UCF). Services processed by the SCF include: supporting trajectory planning of an uncrewed aerial vehicle; obtaining an air coverage capability of a cellular network and cell load information from a network management entity (operation administration and maintenance, OAM); supporting exchanging the uncrewed aerial vehicle services (such as a route, identification, or location tracking) with an uncrewed aerial vehicle server; and supporting interaction with other core network elements (such as an AMF and an NEF), and the like.

The uncrewed aerial vehicle server (UAV server, UVS) is a device that provides an application service for a terminal in this embodiment of this application. The uncrewed aerial vehicle server may be considered as an AF in a 5G mobile communications network, or may be located in a DN, and communicates with a UAV. The UVS may be a functional module (for example, a third-party uncrewed aerial vehicle cloud) in uncrewed aerial system traffic management (unmanned aerial vehicle traffic management, UTM), and supports functions such as registration, flight plan approval, flight path planning, flight operation authorization, flight monitoring, and flight control of the uncrewed aerial vehicle. The UVS may alternatively be an uncrewed aerial vehicle supervision server. The uncrewed aerial vehicle server may alternatively be an uncrewed aerial vehicle application server, and supports control and management of an uncrewed aerial vehicle application service, for example, uncrewed aerial vehicle data collection and video data management.

With increasing applications in the uncrewed aerial vehicle industry, the uncrewed aerial vehicle not only needs to meet a regulatory and industry application requirement during connected flight, but also needs to meet a QoS requirement for real-time online transmission of multimedia services such as images and videos during aerial flight. The uncrewed aerial vehicle has a global positioning system (global positioning system, GPS) functional module, and the uncrewed aerial vehicle can perform automatic flight based on a trajectory that is planned in advance and execute tasks, for example, logistics transmission and electric power inspection. However, customizing a trajectory for the uncrewed aerial vehicle may have the following problems: First, the uncrewed aerial vehicle may fly into an area with poor network coverage or a traffic busy zone. Cellular mobile communication may have a "blind spot" and a "poor spot" in air network coverage, and may have a "busy spot" in cell service load. If the uncrewed aerial vehicle enters an air coverage hole or the traffic busy zone, a communication requirement may not be met. Second, the trajectory of the uncrewed aerial vehicle may not conform to an air route specified by relevant authorities. An air route is an air path with a specific width. A purpose of delimiting the air route is to maintain air traffic order, improve space utilization, and ensure flight security. If the trajectory of the uncrewed aerial vehicle does not meet a specified route requirement or the uncrewed aerial vehicle flies into a no-fly zone, traffic order and flight security will be affected. To resolve the foregoing technical problems, the embodiments of this application provide the following solutions.

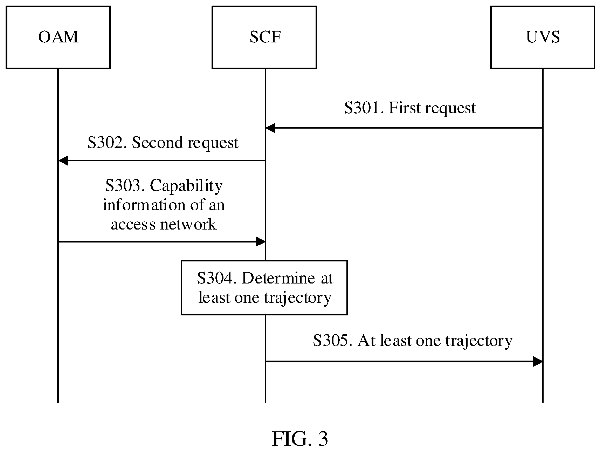

FIG. 3 is a schematic flowchart of a trajectory determining method according to an embodiment of this application. In this embodiment of this application, a trajectory is requested via a data plane. As shown in the figure, steps in this embodiment of this application include at least the following steps.

S301. A UVS sends a first request to an SCF.

Correspondingly, the SCF receives the first request, where the first request is used to indicate the SCF to determine at least one trajectory.

The first request may not only include at least one of a destination of a terminal, a departure point of the terminal, and a communication requirement of the terminal, include a trajectory preset by a UAV, include a UE type, a 3GPP identifier, a message purpose, a departure time, and the like, but may also include a first flight zone.

Optionally, the UVS may alternatively send the first request to the SCF via a NEF. The UVS may be considered as an AF in a mobile network. If an operator is trusted, the UVS may directly interact with the SCF, or may interact with the SCF via the NEF.

Optionally, if the first request does not include the first flight zone, the SCF may request the first flight zone from the UVS.

Optionally, the UVS may send the first request to an OAM, where the first request is used to indicate the OAM to determine the at least one trajectory. Alternatively, the UVS may send the first request to an OAM via the SCF, where the first request is used to indicate the OAM to determine the at least one trajectory.

Optionally, before the UVS sends the first request to the SCF, the UVS may receive a trajectory request sent by the UAV.

The trajectory request may include at least one of the destination of the terminal, the departure point of the terminal, and the communication requirement of the terminal. The trajectory request further includes the trajectory preset by the UAV. The trajectory request may further include the UE type, the 3GPP identifier, the message purpose, the departure time, and the like. The communication requirement of the terminal may include an uplink rate, a downlink rate, a communication delay, and the like.

Optionally, the UVS may receive, by using an established network connection, the trajectory request sent by the UAV. The network connection may be implemented through a communication data plane path from UE to RAN, UPF, and then DN or through another path. The UVS is located in the DN, and the UAV may serve as the terminal.

Optionally, after receiving the trajectory request, the UVS may obtain a second flight zone, and determine a first flight zone based on the at least one of the destination of the terminal, the departure point of the terminal, and the communication requirement of the terminal that are carried in the trajectory request, and the second flight zone.

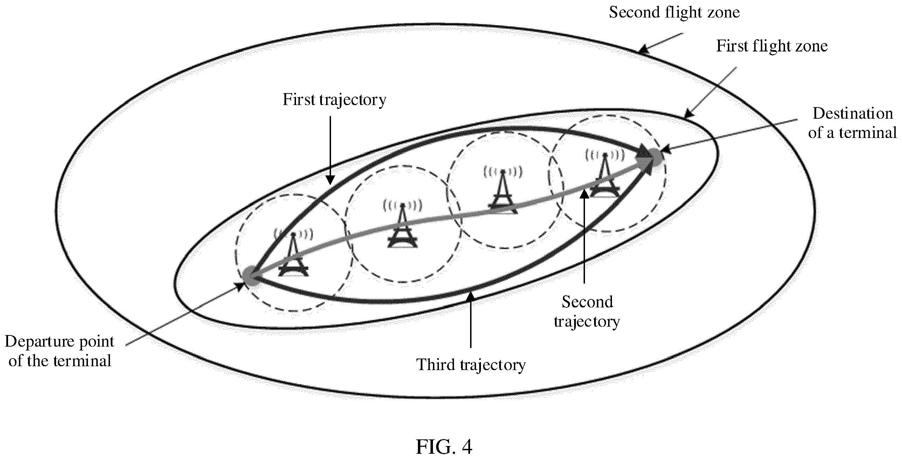

As shown in FIG. 4, the first flight zone is an elliptical area of an inner layer, and the second flight zone is an elliptical area of an outermost layer. The first flight zone is included in the second flight zone, and both the destination of the terminal and the departure point of the terminal are located in the first flight zone. The first flight zone is an air route area that allows to fly, and the second flight zone may include an area other than a fixed no-fly zone, an area other than a fixed no-fly zone and a dynamic no-fly zone, or an area within a planned air route of the uncrewed aerial vehicle. The fixed no-fly zone includes: airport obstacle restrictive surfaces and civil aviation lines and air routes; railways, highways, waterways, air routes, and surrounding areas within 50 meters thereof; key sensitive units and facilities such as municipal and district party committees and governments, military control zones, communications, water supply, power supply, energy supply, storage of hazardous materials, and supervision sites, and surrounding areas within 100 meters thereof; and traffic hubs, railway stations, bus passenger terminals, wharfs, ports, and surrounding areas within 100 meters thereof. The dynamic no-fly zone includes some no-fly zones or restricted flight zones that are relatively dynamic, such as large event sites and surrounding areas thereof that are temporarily controlled due to important events.

Optionally, the UVS may obtain the second flight zone after waiting to receive a plurality of trajectory requests, and determine the first flight zone based on the plurality of trajectory requests and the second flight zone. The plurality of trajectory requests may be similar trajectory requests, for example, the trajectory requests include a same destination of the terminal and a same departure point of the terminal.

Optionally, after receiving the similar trajectory requests, the UVS may send an existing trajectory determining result to the UAV. Optionally, after receiving the trajectory requests, the UVS may determine, based on the message purpose and the UE type that are carried in the trajectory requests, whether to send the first request. If the message purpose is to request a trajectory and the UE type is UAV, the UVS sends the first request. If the message purpose is not to request a trajectory or the UE type is not UAV, the UVS prohibits sending of the first request and waits to receive another message.

S302. The SCF sends a second request to the OAM.

Correspondingly, the OAM receives the second request, where the second request is used to indicate the OAM to obtain capability information of an access network.

The second request may include the at least one of the destination of the terminal, the departure point of the terminal, and the communication requirement of the terminal, may include the trajectory preset by the UAV, and may further include the first flight zone.

Optionally, the OAM receives the second request, where the second request is used to indicate the OAM to determine the at least one trajectory.

S303. The OAM sends the capability information of the access network to the SCF.

The capability information of the access network includes at least one of a coverage capability and a load capability. The coverage capability may include a coverage area (for example, a longitude, a latitude, and a height) and a communication capability (for example, a communication rate and a bandwidth), and the load capability may include a cell traffic volume, an available radio resource, and the like.

S304. The SCF determines the at least one trajectory.

In an implementation, the SCF may obtain the capability information of the access network by using steps S302 and S303, or may obtain the capability information of the access network in another manner, and then determine the at least one trajectory based on the at least one of the destination of the terminal, the departure point of the terminal, and the communication requirement of the terminal that are carried in the first request, and the capability information of the access network.

In another implementation, the SCF may also obtain the first flight zone included in the first request, and obtain the capability information of the access network by using steps S302 and S303, and then determine the at least one trajectory based on the at least one of the destination of the terminal, the departure point of the terminal, and the communication requirement of the terminal that are carried in the first request, the capability information of the access network, and the first flight zone.

For example, as shown in FIG. 4, the first flight zone is the elliptical area of the inner layer, and the second flight zone is the elliptical area of the outermost layer. The dashed line area may represent a coverage area of the access network. It can be learned from FIG. 4 that each point on only the second trajectory is located within the coverage area of the access network. This meets a communication requirement of the UAV. Therefore, the second trajectory meets a flight requirement. However, some points on the first trajectory and the third trajectory are located outside the coverage area of the access network. This does not meet the communication requirement of the UAV. Therefore, the first trajectory and the third trajectory do not meet the flight requirement. Alternatively, a communication rate requirement of the UAV is 1 Mbit/s, and the capability information of the access network provided by the OAM includes: A communication rate within the dashed line area is greater than 1 Mbit/s, and a communication rate outside the dashed line area is less than 1 Mbit/s. It can be learned from FIG. 4 that each point on only the second trajectory is located within the dashed line area. This meets the communication rate requirement of the UAV. Therefore, the second trajectory meets a flight requirement. However, some points on the first trajectory and the third trajectory are located outside the dashed line area. This does not meet the communication rate requirement of the UAV. Therefore, the first trajectory and the third trajectory do not meet the flight requirement.

Optionally, after the SCF receives the first request, if the SCF cannot determine the at least one trajectory based on the at least one of the destination of the terminal, the departure point of the terminal, and the communication requirement of the terminal that are carried in the first request, the capability information of the access network, or the first flight zone, the SCF may send an indication message to the UAV via the UVS. The indication message is used to notify the UAV that determining of the trajectory fails. After receiving the indication message, the UAV may reduce the flight requirement, and resend the first request.

Optionally, after the SCF receives the first request, the first request carries the trajectory preset by the UAV. The SCF may determine, based on the at least one of the destination of the terminal, the departure point of the terminal, and the communication requirement of the terminal that are carried in the first request, the capability information of the access network, and the first flight zone, whether the preset trajectory meets the flight requirement. When the preset trajectory does not meet the flight requirement, the SCF may start to determine the at least one trajectory. When the preset trajectory meets the flight requirement, the SCF may send an indication message to the UAV via the UVS, and the indication message is used to notify the UAV that the preset trajectory may be used to fly.

In this embodiment of this application, the at least one trajectory may alternatively be determined by the OAM. The OAM may receive the first request sent by the UVS, or may receive the first request sent by the UVS via the SCF. Then, the OAM obtains the capability information of the access network, and determines the at least one trajectory based on the at least one of the destination of the terminal, the departure point of the terminal, and the communication requirement of the terminal that are carried in the first request, and the capability information of the access network. Alternatively, the OAM obtains the first flight zone included in the first request, and the capability information of the access network, and determines the at least one trajectory based on the at least one of the destination of the terminal, the departure point of the terminal, and the communication requirement of the terminal that are carried in the first request, the capability information of the access network, and the first flight zone.

In this embodiment of this application, the at least one trajectory may alternatively be determined by the UVS. The UVS may receive the first request sent by the UAV, or may receive the first request sent by the UAV via the SCF. The UVS obtains the capability information of the access network from the OAM, or obtains the capability information of the access network from the OAM via the network capability exposure network element or the SCF. The UVS determines the at least one trajectory based on the at least one of the destination of the terminal, the departure point of the terminal, and the communication requirement of the terminal that are carried in the first request, and the capability information of the access network. Alternatively, the UVS obtains the first flight zone and the capability information of the access network, and determines the at least one trajectory based on the at least one of the destination of the terminal, the departure point of the terminal, and the communication requirement of the terminal that are carried in the first request, the capability information of the access network, and the first flight zone.

S305. The SCF sends the at least one trajectory to the UVS.

Optionally, the SCF may send the at least one trajectory to the UVS via the NEF.

Optionally, the SCF may allocate one route identifier to each of the at least one trajectory, and send the route identifier and route information to the UVS. The route information may include a length and signal strength of each trajectory.

Optionally, after receiving the at least one trajectory, the UVS may send a first message to the UAV, where the first message includes the at least one trajectory, and the first message may also include a route identifier and route information that are corresponding to each trajectory. The route information may include a length and signal strength of each trajectory.

Optionally, after receiving the first message, the UAV selects one trajectory from the at least one trajectory.

During specific implementation, the UAV may obtain the length of each of the at least one trajectory, and then select a trajectory with a shortest length from the at least one trajectory, and determine a route identifier corresponding to the selected trajectory. Alternatively, the UAV may obtain the signal strength of each of the at least one trajectory, select a trajectory with highest signal strength from the at least one trajectory based on the signal strength of each trajectory, and determine a route identifier corresponding to the selected trajectory.

Optionally, after the UAV selects one trajectory, the UAV may send a second message to the SCF, the UVS, or the OAM. The second message may include a route identifier corresponding to the selected trajectory, and the second message is used to notify the UVS that selection of one trajectory from the at least one trajectory succeeds.

Optionally, because a network environment changes, or a current flight requirement is different from a flight requirement at a time when the first request is sent, some trajectories may fail to meet the flight requirement of the UAV. When none of the at least one trajectory can meet a flight requirement of the terminal, the UAV may send a second message to the SCF, the UVS, or the OAM. The second message is used to notify the SCF, the UVS, or the OAM that selection of one trajectory from the at least one trajectory fails. In this case, the SCF, the UVS, or the OAM may re-determine at least one trajectory and send the at least one trajectory to the UAV.

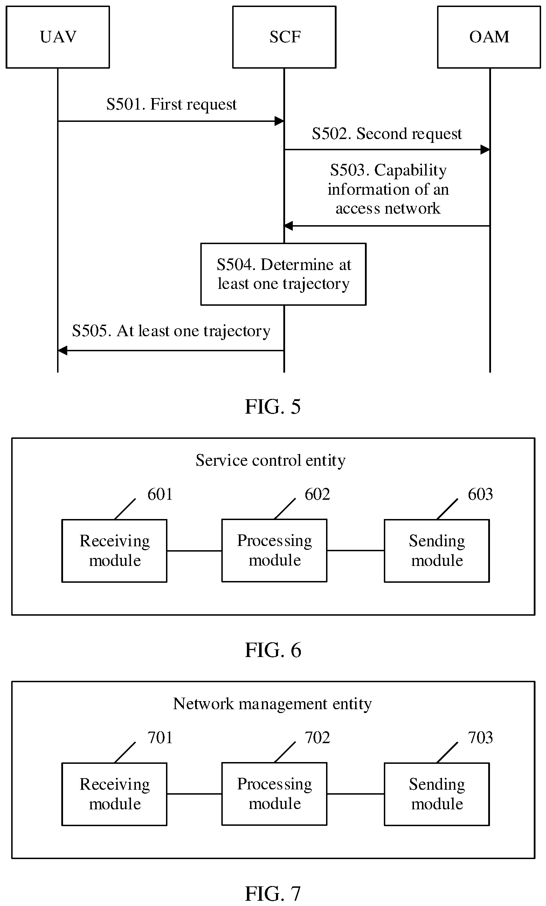

FIG. 5 is a schematic flowchart of another trajectory determining method according to an embodiment of this application. In this embodiment of this application, a trajectory is requested via a control plane. As shown in the figure, steps in this embodiment of this application include at least the following steps.

S501. An SCF receives a first request.

The first request may include at least one of a destination of a terminal, a departure point of the terminal, and a communication requirement of the terminal. The first request further includes a trajectory preset by a UAV. The first request may further include a UE type, a 3GPP identifier, a message purpose, a departure time, and the like. The communication requirement of the terminal may include an uplink rate, a downlink rate, a communication delay, and the like.

Optionally, the first request may be a trajectory request.

Optionally, the SCF receives the first request sent by the UAV via an AMF, where the first request may be sent by using control plane control signaling (for example, an N1 Message).

Optionally, after receiving the first request, the SCF may send a third request to a UVS.

The third request may include at least one of the destination of the terminal, the departure point of the terminal, or the communication requirement of the terminal, may include the trajectory preset by the UAV, and may include the UE type, the 3GPP identifier, the message purpose, the departure time, and the like. The communication requirement of the terminal may include an uplink rate, a downlink rate, a communication delay, and the like.

Optionally, after receiving the first request, the SCF may determine, based on the message purpose and the UE type that are carried in the first request, whether to send the third request. If the message purpose is to request a trajectory and the UE type is UAV, the SCF sends the third request to the UVS. If the message purpose is not to request a trajectory or the UE type is not UAV, the SCF prohibits sending of the third request to the UVS and waits to receive another message.

Optionally, after receiving the third request, the UVS may obtain a second flight zone, and determine a first flight zone based on the at least one of the destination of the terminal, the departure point of the terminal, and the communication requirement of the terminal that are carried in the third request, and the second flight zone.

As shown in FIG. 4, the first flight zone is an elliptical area of an inner layer, and the second flight zone is an elliptical area of an outermost layer. The first flight zone is included in the second flight zone, and both the destination of the terminal and the departure point of the terminal are located in the first flight zone. The first flight zone is an air route area that allows to fly, and the second flight zone may include an area other than a fixed no-fly zone, an area other than a fixed no-fly zone and a dynamic no-fly zone, or an area within a planned air route of the uncrewed aerial vehicle. The fixed no-fly zone includes: airport obstacle restrictive surfaces and civil aviation lines and air routes; railways, highways, waterways, air routes, and surrounding areas within 50 meters thereof; key sensitive units and facilities such as municipal and district party committees and governments, military control zones, communications, water supply, power supply, energy supply, storage of hazardous materials, and supervision sites, and surrounding areas within 100 meters thereof; and traffic hubs, railway stations, bus passenger terminals, wharfs, ports, and surrounding areas within 100 meters thereof. The dynamic no-fly zone includes some no-fly zones or restricted flight zones that are relatively dynamic, such as large event sites and surrounding areas thereof that are temporarily controlled due to important events.

Optionally, the UVS may send a first message to the SCF, where the first message includes the first flight zone, and the first message may be reply information of the third request.

S502. The SCF sends a second request to an OAM.

Correspondingly, the OAM receives the second request, where the second request is used to indicate the OAM to obtain capability information of an access network in the first flight zone.

Optionally, the second request may include the first flight zone.

Optionally, after receiving the first message, the SCF sends the second request to the OAM.

S503. After receiving the second request, the OAM sends the capability information of the access network to the SCF.

The capability information of the access network includes at least one of a coverage capability and a load capability. The coverage capability may include a coverage area (for example, a longitude, a latitude, and a height) and a communication capability (for example, a communication rate and a bandwidth), and the load capability may include a cell traffic volume, an available radio resource, and the like.

S504. The SCF determines at least one trajectory.

In an implementation, the SCF may obtain the capability information of the access network by using steps S502 and S503, or may obtain the capability information of the access network in another manner, and then determine the at least one trajectory based on the at least one of the destination of the terminal, the departure point of the terminal, and the communication requirement of the terminal that are carried in the first request, and the capability information of the access network.

In another implementation, the SCF may also obtain the first flight zone included in the first message, and obtain the capability information of the access network by using steps S502 and S503, and then determine the at least one trajectory based on the at least one of the destination of the terminal, the departure point of the terminal, and the communication requirement of the terminal that are carried in the first request, the capability information of the access network, and the first flight zone.

For example, as shown in FIG. 4, the first flight zone is the elliptical area of the inner layer, and the second flight zone is the elliptical area of the outermost layer. The dashed line area may represent a coverage area of the access network. It can be learned from FIG. 4 that each point on only the second trajectory is located within the coverage area of the access network. This meets a communication requirement of the UAV. Therefore, the second trajectory meets a flight requirement. However, some points on the first trajectory and the third trajectory are located outside the coverage area of the access network. This does not meet the communication requirement of the UAV. Therefore, the first trajectory and the third trajectory do not meet the flight requirement. Alternatively, a communication rate requirement of the UAV is 1 Mbit/s, and the capability information of the access network provided by the OAM includes: A communication rate within the dashed line area is greater than 1 Mbit/s, and a communication rate outside the dashed line area is less than 1 Mbit/s. It can be learned from FIG. 4 that each point on only the second trajectory is located within the dashed line area. This meets the communication rate requirement of the UAV. Therefore, the second trajectory meets a flight requirement. However, some points on the first trajectory and the third trajectory are located outside the dashed line area. This does not meet the communication rate requirement of the UAV. Therefore, the first trajectory and the third trajectory do not meet the flight requirement.

Optionally, if the SCF cannot determine the at least one trajectory based on the at least one of the destination of the terminal, the departure point of the terminal, and the communication requirement of the terminal that are carried in the first request, the capability information of the access network, or the first flight zone, the SCF may send an indication message to the UAV via an AMF. The indication message is used to notify the UAV that determining of the trajectory fails. After receiving the indication message, the UAV may reduce the flight requirement, and resend the first request.

Optionally, the first request that is received by the SCF carries the trajectory preset by the UAV. The SCF may determine, based on the at least one of the destination of the terminal, the departure point of the terminal, and the communication requirement of the terminal that are carried in the first request, the capability information of the access network, and the first flight zone, whether the preset trajectory meets the flight requirement. When the preset trajectory does not meet the flight requirement, the SCF may start to determine the at least one trajectory. When the preset trajectory meets the flight requirement, the SCF may send an indication message to the UAV via the AMF, and the indication message is used to notify the UAV that the preset trajectory may be used to fly.

In this embodiment of this application, the at least one trajectory may alternatively be determined by the OAM. The OAM may receive the first request. Then, the OAM obtains the capability information of the access network, and determines the at least one trajectory based on the at least one of the destination of the terminal, the departure point of the terminal, and the communication requirement of the terminal that are carried in the first request, and the capability information of the access network. Alternatively, the OAM obtains the first flight zone included in the first request, and the capability information of the access network, and determines the at least one trajectory based on the at least one of the destination of the terminal, the departure point of the terminal, and the communication requirement of the terminal that are carried in the first request, the capability information of the access network, and the first flight zone. In addition, the at least one trajectory may alternatively be determined by the UVS, which is similar to a method for determining the at least one trajectory by the SCF or the OAM. Details are not described in this step.

S505. The SCF sends the at least one trajectory to the UAV.

Optionally, the SCF sends the at least one trajectory to the UAV via the AMF. The SCF may send the at least one trajectory by using control plane control signaling (for example, an N1 Message).

Optionally, the SCF may allocate one route identifier to each of the at least one trajectory, and send the route identifier and route information that are corresponding to each trajectory to the UAV. The route information may include a route length and signal strength of a route.

Optionally, the UAV selects one trajectory from the at least one trajectory.

During specific implementation, the UAV may obtain a length of each of the at least one trajectory, and then select a trajectory with a shortest length from the at least one trajectory, and determine a route identifier corresponding to the selected trajectory. Alternatively, the UAV may obtain signal strength of each trajectory, select a trajectory with highest signal strength from the at least one trajectory based on the signal strength of each of the at least one trajectory, and determine a route identifier corresponding to the selected trajectory.

Optionally, the UAV may send a second message to the SCF via the AMF. The UAV may send the second message by using control plane control signaling (for example, an N1 Message). The second message is used to notify the SCF that selection of one trajectory from the at least one trajectory succeeds. The second message may include a route identifier corresponding to the selected trajectory. The SCF obtains a trajectory of the UAV based on the route identifier, and helps the UAV perform network access and network handover during a flight process.

Optionally, because a network environment changes, or a current flight requirement is different from a flight requirement at a time when the first request is sent, some trajectories may fail to meet the flight requirement of the UAV. When none of the at least one trajectory can meet a flight requirement of the terminal, the UAV may send a second message to the SCF, the UVS, or the OAM. The second message is used to notify the SCF, the UVS, or the OAM that selection of one trajectory from the at least one trajectory fails. In this case, the SCF, the UVS, or the OAM may re-determine at least one trajectory and send the at least one trajectory to the UAV.

In this embodiment of this application, the UVS determines the first flight zone based on the at least one of the destination of the terminal, the departure point of the terminal, and the communication requirement of the terminal, and the second flight zone, and provides the first flight zone for the SCF. The SCF determines the at least one trajectory based on the at least one of the destination of the terminal, the departure point of the terminal, and the communication requirement of the terminal, the capability information of the access network, and the first flight zone, so as to provide the at least one trajectory for the UAV to fly. This not only ensures that a trajectory of the UAV meets an airspace management requirement, but also avoids a no-fly zone. In addition, this can prevent the UAV from flying into a coverage hole or a traffic busy zone, and ensure an air communication requirement during a flight process. Consequently, normal flight of the UAV can be implemented.

FIG. 6 is a schematic structural diagram of a service control entity according to an embodiment of this application. The service control entity may include a receiving module 601, a processing module 602, and a sending module 603. Detailed descriptions of the modules are as follows:

The receiving module 601 is configured to receive a first request, where the first request includes at least one of a destination of a terminal, a departure point of the terminal, and a communication requirement of the terminal.

The processing module 602 is configured to determine at least one trajectory.

The sending module 603 is configured to send the at least one trajectory, where the at least one trajectory is used to indicate a trajectory of the terminal.

Optionally, the processing module 602 is further configured to: obtain capability information of an access network; and determine the at least one trajectory based on the at least one of the destination of the terminal, the departure point of the terminal, and the communication requirement of the terminal that are carried in the first request, and the capability information of the access network.

Optionally, the sending module 603 is further configured to send a second request to a network management entity. The receiving module 601 is further configured to receive the capability information of the access network sent by the network management entity, where the capability information of the access network includes at least one of a coverage capability and a load capability.

Optionally, the processing module 602 is further configured to: obtain a first flight zone and capability information of an access network; and determine the at least one trajectory based on the at least one of the destination of the terminal, the departure point of the terminal, and the communication requirement of the terminal that are carried in the first request, the capability information of the access network, and the first flight zone.

Optionally, the receiving module 601 is further configured to receive the first request sent by an uncrewed aerial vehicle server, where the first request includes the first flight zone.

Optionally, the processing module 602 is further configured to: determine whether a preset trajectory meets a flight requirement; and determine the at least one trajectory when the preset trajectory does not meet the flight requirement.

It should be noted that, for implementation of each module, refer to corresponding descriptions of the method embodiments shown in FIG. 3 and FIG. 5. The module performs the methods and the functions performed by the SCF in the foregoing embodiments.

FIG. 7 is a schematic structural diagram of a network management entity according to an embodiment of this application. The network management entity may include a receiving module 701, a processing module 702, and a sending module 703. Detailed descriptions of the modules are as follows:

The receiving module 701 is configured to receive a first request, where the first request includes at least one of a destination of a terminal, a departure point of the terminal, and a communication requirement of the terminal.

The processing module 702 is configured to determine at least one trajectory.

The sending module 703 is configured to send the at least one trajectory, where the at least one trajectory is used to indicate a trajectory of the terminal.

Optionally, the processing module 702 is further configured to determine the at least one trajectory based on the at least one of the destination of the terminal, the departure point of the terminal, and the communication requirement of the terminal that are carried in the first request, and capability information of an access network.

Optionally, the processing module 702 is further configured to: obtain a first flight zone and capability information of an access network; and determine the at least one trajectory based on the at least one of the destination of the terminal, the departure point of the terminal, and the communication requirement of the terminal that are carried in the first request, the capability information of the access network, and the first flight zone.

It should be noted that, for implementation of each module, refer to corresponding descriptions of the method embodiments shown in FIG. 3 and FIG. 5. The module performs the methods and the functions performed by the OAM in the foregoing embodiments.

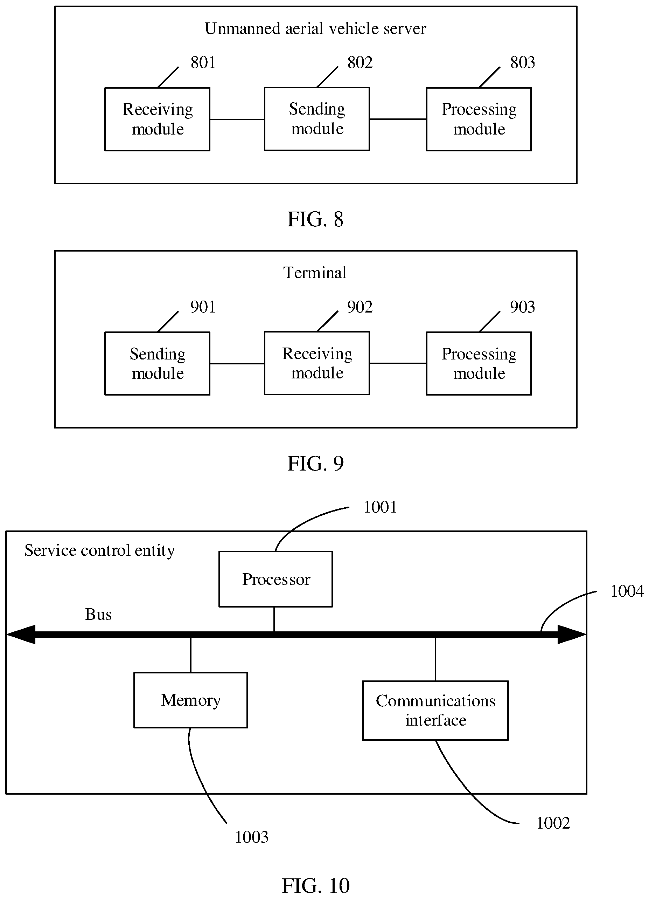

FIG. 8 is a schematic structural diagram of an uncrewed aerial vehicle server according to an embodiment of this application. The uncrewed aerial vehicle service server may include a receiving module 801, a sending module 802, and a processing module 803. Detailed descriptions of the modules are as follows:

The receiving module 801 is configured to receive a first request, where the first request includes at least one of a destination of a terminal, a departure point of the terminal, and a communication requirement of the terminal.

The sending module 802 is configured to send a first message, where the first message is used to determine at least one trajectory.

Optionally, the sending module 802 is further configured to send the first message to a service control entity, where the first message is used to indicate the service control entity to determine the at least one trajectory; the sending module 802 is further configured to send the first message to the service control entity via a capability exposure network element, where the first message is used to indicate the service control entity to determine the at least one trajectory; the sending module 802 is further configured to send the first message to a network management entity, where the first message is used to indicate the network management entity to determine the at least one trajectory; or the sending module 802 is further configured to send the first message to the network management entity via the service control entity, where the first message is used to indicate the network management entity to determine the at least one trajectory.

Optionally, the processing module 803 is configured to: obtain a second flight zone; and determine a first flight zone based on the at least one of the destination of the terminal, the departure point of the terminal, and the communication requirement of the terminal that are carried in the first request, and the second flight zone, where the first flight zone is included in the second flight zone.

The first message includes the first flight zone.

It should be noted that, for implementation of each module, refer to corresponding descriptions of the method embodiments shown in FIG. 3 and FIG. 5. The module performs the methods and the functions performed by the UVS in the foregoing embodiments.

FIG. 9 is a schematic structural diagram of a terminal according to an embodiment of this application. The terminal may include a sending module 901, a receiving module 902, and a processing module 903. Detailed descriptions of the modules are as follows:

The sending module 901 is configured to send a first request, where the first request includes at least one of a destination of the terminal, a departure point of the terminal, and a communication requirement of the terminal, and the first request is used to indicate a service control entity, an uncrewed aerial vehicle server, or a network management entity to determine at least one trajectory.

The receiving module 902 is configured to receive a first message, where the first message includes the at least one trajectory.

Optionally, the sending module 901 is further configured to send the first request to the service control entity via a mobility management entity, where the first request is used to indicate the service control entity to determine the at least one trajectory.

Optionally, the sending module 901 is further configured to send the first request to the service control entity via the uncrewed aerial vehicle server, where the first request is used to indicate the service control entity to determine the at least one trajectory.

Optionally, the processing module 903 is configured to select one trajectory from the at least one trajectory.

Optionally, the processing module 903 is configured to: obtain a length of each trajectory in the at least one trajectory; and select a trajectory with a shortest length from the at least one trajectory.

Optionally, the sending module 901 is further configured to: when none of the at least one trajectory can meet a flight requirement of the terminal, send a second message to the service control entity, the uncrewed aerial vehicle server, or the network management entity, where the second message is used to notify the service control entity, the uncrewed aerial vehicle server, or the network management entity that selection of one trajectory from the at least one trajectory fails.

It should be noted that, for implementation of each module, refer to corresponding descriptions of the method embodiments shown in FIG. 3 and FIG. 5. The module performs the methods and the functions performed by the UAV in the foregoing embodiments.

FIG. 10 is a schematic structural diagram of another service control entity according to an embodiment of this application. As shown in FIG. 10, the service control entity may include at least one processor 1001, at least one communications interface 1002, at least one memory 1003, and at least one communications bus 1004.

The processor 1001 may be a central processing unit, a general-purpose processor, a digital signal processor, an application-specific integrated circuit, a field programmable gate array or another programmable logic device, a transistor logic device, a hardware component, or any combination thereof. The processor 1001 may implement or execute various example logical blocks, modules, and circuits described with reference to content disclosed in this application. Alternatively, the processor may be a combination of processors implementing a computing function, for example, a combination of one or more microprocessors or a combination of a digital signal processor and a microprocessor. The communications bus 1004 may be a peripheral component interconnect PCI bus, an extended industry standard architecture EISA bus, or the like. The bus may be classified into an address bus, a data bus, a control bus, or the like. For ease of representation, only one thick line is used to represent the bus in FIG. 10, but this does not mean that there is only one bus or only one type of bus. The communications bus 1004 is configured to implement connection and communication between these components. The communications interface 1002 in the device in this embodiment of this application is configured to perform signaling or data communication with another node device. The memory 1003 may include a volatile memory, for example, a nonvolatile dynamic random access memory (nonvolatile random-access memory, NVRAM), a phase-change random-access memory (phase-change RAM, PRAM), or a magnetoresistive random-access memory (magnetoresistive RAM, MRAM). The memory 1003 may further include a nonvolatile memory, for example, at least one magnetic disk storage device, an electrically erasable programmable read-only memory (electrically erasable programmable read-only memory, EEPROM), a flash memory device such as a NOR flash memory (NOR flash memory) or a NAND flash memory (NAND flash memory), or a semiconductor device such as a solid-state drive (solid state disk, SSD). Optionally, the memory 1003 may alternatively be at least one storage apparatus far away from the processor 1001. Optionally, the memory 1003 may further store a group of program code, and optionally, the processor 1001 may further execute a program stored in the memory 1003.
receiving a first request through the communications interface 1002, where the first request includes at least one of a destination of a terminal, a departure point of the terminal, and a communication requirement of the terminal;
determining at least one trajectory; and
sending the at least one trajectory through the communications interface 1002, where the at least one trajectory is used to indicate a trajectory of the terminal.

The processor 1001 is further configured to perform the following operations:
obtaining capability information of an access network; and
determining the at least one trajectory based on the at least one of the destination of the terminal, the departure point of the terminal, and the communication requirement of the terminal that are carried in the first request, and the capability information of the access network.

The processor 1001 is further configured to perform the following operations:
sending a second request to a network management entity through the communications interface 1002; and
receiving the capability information of the access network sent by the network management entity through the communications interface 1002, where the capability information of the access network includes at least one of a coverage capability and a load capability.

The processor 1001 is further configured to perform the following operations:
obtaining a first flight zone and the capability information of the access network; and
determining the at least one trajectory based on the at least one of the destination of the terminal, the departure point of the terminal, and the communication requirement of the terminal that are carried in the first request, the capability information of the access network, and the first flight zone.

The processor 1001 is further configured to perform the following operation:
receiving the first request sent by an uncrewed aerial vehicle server through the communications interface 1002, where the first request includes the first flight zone.

The processor 1001 is further configured to perform the following operations:
determining whether a preset trajectory meets a flight requirement; and
determining the at least one trajectory when the preset trajectory does not meet the flight requirement.

Further, the processor may further cooperate with the memory and the communications interface to perform operations of the SCF in the foregoing embodiments of this application.

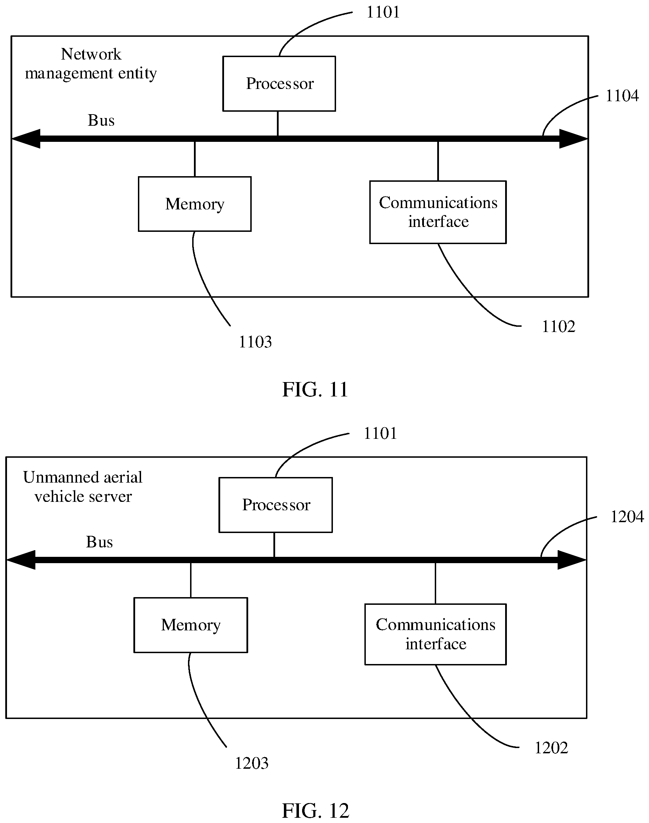

FIG. 11 is a schematic structural diagram of another network management entity according to an embodiment of this application. As shown in the figure, the network management entity may include at least one processor 1101, at least one communications interface 1102, at least one memory 1103, and at least one communications bus 1104.

The processor 1101 may be processors of various types that are mentioned above. The communications bus 1104 may be a peripheral component interconnect PCI bus, an extended industry standard architecture EISA bus, or the like. The bus may be classified into an address bus, a data bus, a control bus, or the like. For ease of representation, only one thick line is used to represent the bus in FIG. 11, but this does not mean that there is only one bus or only one type of bus. The communications bus 1104 is configured to implement connection and communication between these components. The communications interface 1102 in the device in this embodiment of this application is configured to perform signaling or data communication with another node device. The memory 1103 may be memories of various types that are mentioned above. Optionally, the memory 1103 may be at least one storage apparatus far away from the processor 1101. The memory 1103 stores a group of program code, and the processor 1101 executes a program that is in the memory 1103 and that is executed by the OAM.
receiving a first request through the communications interface 1102, where the first request includes at least one of a destination of a terminal, a departure point of the terminal, and a communication requirement of the terminal;
determining at least one trajectory; and
sending the at least one trajectory through the communications interface 1102, where the at least one trajectory is used to indicate a trajectory of the terminal.

The processor 1101 is further configured to perform the following operations:
obtaining capability information of an access network; and
determining the at least one trajectory based on the at least one of the destination of the terminal, the departure point of the terminal, and the communication requirement of the terminal that are carried in the first request, and the capability information of the access network.

The processor 1101 is further configured to perform the following operations:
obtaining a first flight zone and the capability information of the access network; and
determining the at least one trajectory based on the at least one of the destination of the terminal, the departure point of the terminal, and the communication requirement of the terminal that are carried in the first request, the capability information of the access network, and the first flight zone.

Further, the processor may further cooperate with the memory and the communications interface to perform operations of the OAM in the foregoing embodiments of this application.

FIG. 12 is a schematic structural diagram of another uncrewed aerial vehicle server according to an embodiment of this application. As shown in the figure, the uncrewed aerial vehicle server may include at least one processor 1201, at least one communications interface 1202, at least one memory 1203, and at least one communications bus 1204.

The processor 1201 may be processors of various types mentioned above. The communications bus 1204 may be a peripheral component interconnect PCI bus, an extended industry standard architecture EIS A bus, or the like. The bus may be classified into an address bus, a data bus, a control bus, or the like. For ease of representation, only one thick line is used to represent the bus in FIG. 12, but this does not mean that there is only one bus or only one type of bus. The communications bus 1204 is configured to implement connection and communication between these components. The communications interface 1202 in the device in this embodiment of this application is configured to perform signaling or data communication with another node device. The memory 1203 may be memories of various types mentioned above. Optionally, the memory 1203 may be at least one storage apparatus far away from the processor 1201. The memory 1203 stores a group of program code, and the processor 1201 executes a program that is in the memory 1203 and that is executed by the UVS.
receiving a first request through the communications interface 1202, where the first request includes at least one of a destination of a terminal, a departure point of the terminal, and a communication requirement of the terminal; and
sending a first message through the communications interface 1202, where the first message is used to determine at least one trajectory.

The processor 1201 is further configured to perform the following operations:
sending the first message to a service control entity through the communications interface 1202, where the first message is used to indicate the service control entity to determine the at least one trajectory;
sending the first message to the service control entity via a capability exposure network element, where the first message is used to indicate the service control entity to determine the at least one trajectory;
sending the first message to a network management entity through the communications interface 1202, where the first message is used to indicate the network management entity to determine the at least one trajectory; or
sending the first message to the network management entity via the service control entity, where the first message is used to indicate the network management entity to determine the at least one trajectory.

The processor 1201 is further configured to perform the following operations:
obtaining a second flight zone; and
determining a first flight zone based on the at least one of the destination of the terminal, the departure point of the terminal, and the communication requirement of the terminal that are carried in the first request, and the second flight zone, where the first flight zone is included in the second flight zone.

The first message includes the first flight zone.

Further, the processor may further cooperate with the memory and the communications interface to perform operations of the UVS in the foregoing embodiments of this application.

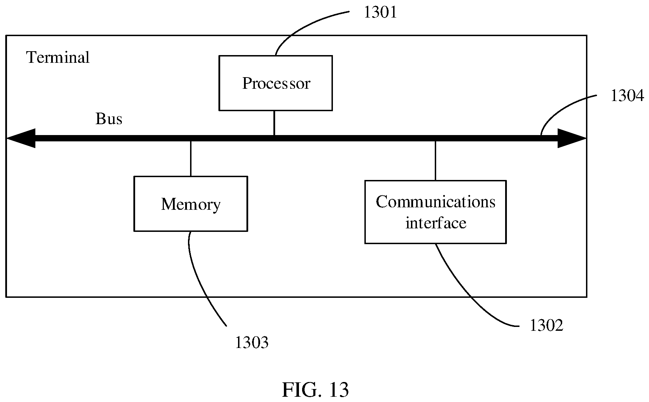

FIG. 13 is a schematic structural diagram of another terminal according to an embodiment of this application. As shown in the figure, the terminal may include at least one processor 1301, at least one communications interface 1302, at least one memory 1303, and at least one communications bus 1304.

The processor 1301 may be processors of various types that are mentioned above. The communications bus 1304 may be a peripheral component interconnect PCI bus, an extended industry standard architecture EISA bus, or the like. The bus may be classified into an address bus, a data bus, a control bus, or the like. For ease of representation, only one thick line is used to represent the bus in FIG. 13, but this does not mean that there is only one bus or only one type of bus. The communications bus 1304 is configured to implement connection and communication between these components. The communications interface 1302 in the device in this embodiment of this application is configured to perform signaling or data communication with another node device. The memory 1303 may be memories of various types mentioned above. Optionally, the memory 1303 may alternatively be at least one storage apparatus far away from the processor 1301. The memory 1303 stores a group of program code, and the processor 1301 executes a program that is in the memory 1303 and that is executed by the UAV.
sending a first request through the communications interface 1302, where the first request includes at least one of a destination of the terminal, a departure point of the terminal, and a communication requirement of the terminal, and the first request is used to indicate a service control entity, an uncrewed aerial vehicle server, or a network management entity to determine at least one trajectory; and
receiving a first message through the communications interface 1302, where the first message includes the at least one trajectory.

The processor 1301 is further configured to perform the following operations:
sending the first request to the service control entity via a mobility management entity, where the first request is used to indicate the service control entity to determine the at least one trajectory.

The processor 1301 is further configured to perform the following operation:
sending the first request to the service control entity via the uncrewed aerial vehicle server, where the first request is used to indicate the service control entity to determine the at least one trajectory.

The processor 1301 is further configured to perform the following operation:
selecting one trajectory from the at least one trajectory.

The processor 1301 is further configured to perform the following operations:
obtaining a length of each trajectory in the at least one trajectory; and
selecting a trajectory with a shortest length from the at least one trajectory.

The processor 1301 is further configured to perform the following operation:
when none of the at least one trajectory can meet a flight requirement of the terminal, sending a second message to the service control entity, the uncrewed aerial vehicle server, or the network management entity through the communications interface 1302, where the second message is used to notify the service control entity, the uncrewed aerial vehicle server, or the network management entity that selection of one trajectory from the at least one trajectory fails.

Further, the processor may further cooperate with the memory and the communications interface to perform operations of the UAV in the foregoing embodiments of this application.

All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on the computer, the procedure or functions according to the embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semi-conductor medium (for example, a solid-state drive Solid State Disk (SSD)), or the like.

The objectives, technical solutions, and beneficial effects of this application are further described in detail in the foregoing specific implementations. Any modification, equivalent replacement, or improvement made without departing from the spirit and principle of this application shall fall within the protection scope of this application.

## Claims

1. A trajectory determining method, wherein the method comprises:
receiving, by a service control entity, a first request, wherein the first request comprises at least one of a destination of a terminal, a departure point of the terminal, and a communication requirement of the terminal;
determining, by the service control entity, at least one trajectory; and
sending, by the service control entity, the at least one trajectory, wherein the at least one trajectory is used to indicate a trajectory of the terminal.

2. The method according to claim 1, wherein the determining, by the service control entity, at least one trajectory comprises:
obtaining, by the service control entity, capability information of an access network; and
determining, by the service control entity, the at least one trajectory based on the at least one of the destination of the terminal, the departure point of the terminal, and the communication requirement of the terminal that are carried in the first request, and the capability information of the access network.

3. The method according to claim 2, wherein the obtaining, by the service control entity, capability information of an access network comprises:
sending, by the service control entity, a second request to a network management entity; and
receiving, by the service control entity, the capability information of the access network sent by the network management entity, wherein the capability information of the access network comprises at least one of a coverage capability and a load capability.

4. The method according to claim 1, wherein the determining, by the service control entity, at least one trajectory comprises:
obtaining, by the service control entity, a first flight zone and capability information of an access network; and
determining, by the service control entity, the at least one trajectory based on the at least one of the destination of the terminal, the departure point of the terminal, and the communication requirement of the terminal that are carried in the first request, the capability information of the access network, and the first flight zone.

5. The method according to claim 4, wherein the obtaining, by the service control entity, a first flight zone comprises:
receiving, by the service control entity, the first request sent by an uncrewed aerial vehicle server, wherein the first request comprises the first flight zone.

6. The method according to any one of claims 1 to 5, wherein the first request further comprises a preset trajectory, and the method further comprises:
determining, by the service control entity, whether the preset trajectory meets a flight requirement; and
determining, by the service control entity, the at least one trajectory when the preset trajectory does not meet the flight requirement.

7. A trajectory determining method, wherein the method comprises:
receiving, by a network management entity, a first request, wherein the first request comprises at least one of a destination of a terminal, a departure point of the terminal, and a communication requirement of the terminal;
determining, by the network management entity, at least one trajectory; and
sending, by the network management entity, the at least one trajectory, wherein the at least one trajectory is used to indicate a trajectory of the terminal.

8. The method according to claim 7, wherein the determining, by the network management entity, at least one trajectory further comprises:
obtaining, by the network management entity, capability information of an access network; and
determining, by the network management entity, the at least one trajectory based on the at least one of the destination of the terminal, the departure point of the terminal, and the communication requirement of the terminal that are carried in the first request, and the capability information of the access network.

9. The method according to claim 7, wherein the determining, by the network management entity, at least one trajectory further comprises:
obtaining, by the network management entity, a first flight zone and capability information of an access network; and
determining, by the network management entity, the at least one trajectory based on the at least one of the destination of the terminal, the departure point of the terminal, and the communication requirement of the terminal that are carried in the first request, the capability information of the access network, and the first flight zone.

10. A trajectory determining method, wherein the method comprises:
receiving, by an uncrewed aerial vehicle server, a first request, wherein the first request comprises at least one of a destination of a terminal, a departure point of the terminal, and a communication requirement of the terminal;
sending, by the uncrewed aerial vehicle server, a first message, wherein the first message is used to determine at least one trajectory.

11. The method according to claim 10, wherein the sending, by the uncrewed aerial vehicle server, a first message comprises:
sending, by the uncrewed aerial vehicle server, the first message to a service control entity, wherein the first message is used to indicate the service control entity to determine the at least one trajectory;
sending, by the uncrewed aerial vehicle server, the first message to a service control entity via a capability exposure network element, wherein the first message is used to indicate the service control entity to determine the at least one trajectory;
sending, by the uncrewed aerial vehicle server, the first message to a network management entity, wherein the first message is used to indicate the network management entity to determine the at least one trajectory; or
sending, by the uncrewed aerial vehicle server, the first message to a network management entity via a service control entity, wherein the first message is used to indicate the network management entity to determine the at least one trajectory.

12. The method according to claim 10 or 11, wherein before the sending, by the uncrewed aerial vehicle server, a first message, the method further comprises:
obtaining, by the uncrewed aerial vehicle server, a second flight zone; and
determining, by the uncrewed aerial vehicle server, a first flight zone based on the at least one of the destination of the terminal, the departure point of the terminal, and the communication requirement of the terminal that are carried in the first request, and the second flight zone, wherein the first flight zone is comprised in the second flight zone.

13. The method according to claim 12, wherein the first message comprises the first flight zone.

14. A trajectory determining method, wherein the method comprises:
sending, by a terminal, a first request, wherein the first request comprises at least one of a destination of the terminal, a departure point of the terminal, and a communication requirement of the terminal, and the first request is used to indicate a service control entity, an uncrewed aerial vehicle server, or a network management entity to determine at least one trajectory; and
receiving, by the terminal, a first message, wherein the first message comprises the at least one trajectory.

15. The method according to claim 14, wherein the method further comprises:
sending, by the terminal, the first request to the service control entity via a mobility management entity, wherein the first request is used to indicate the service control entity to determine the at least one trajectory.

16. The method according to claim 14, wherein the method further comprises:
sending, by the terminal, the first request to the service control entity via the uncrewed aerial vehicle server, wherein the first request is used to indicate the service control entity to determine the at least one trajectory.

17. The method according to any one of claims 14 to 16, wherein after the receiving, by the terminal, a first message, the method further comprises:
selecting, by the terminal, one trajectory from the at least one trajectory.

18. The method according to claim 17, wherein the selecting, by the terminal, one trajectory from the at least one trajectory comprises:
obtaining, by the terminal, a length of each trajectory in the at least one trajectory; and
selecting, by the terminal, a trajectory with a shortest length from the at least one trajectory.

19. The method according to any one of claims 14 to 16, wherein after the receiving, by the terminal, a first message, the method further comprises:
when none of the at least one trajectory can meet a flight requirement of the terminal, sending, by the terminal, a second message to the service control entity, the uncrewed aerial vehicle server, or the network management entity, wherein the second message is used to notify the service control entity, the uncrewed aerial vehicle server, or the network management entity that selection of one trajectory from the at least one trajectory fails.

20. A service control entity, wherein the service control entity comprises:
a receiving module, configured to receive a first request, wherein the first request comprises at least one of a destination of a terminal, a departure point of the terminal, and a communication requirement of the terminal;
a processing module, configured to determine at least one trajectory; and
a sending module, configured to send the at least one trajectory, wherein the at least one trajectory is used to indicate a trajectory of the terminal.

21. The service control entity according to claim 20, wherein
the processing module is further configured to: obtain capability information of an access network; and determine the at least one trajectory based on the at least one of the destination of the terminal, the departure point of the terminal, and the communication requirement of the terminal that are carried in the first request, and the capability information of the access network.

22. The service control entity according to claim 21, wherein
the sending module is further configured to send a second request to a network management entity; and
the receiving module is further configured to receive the capability information of the access network sent by the network management entity, wherein the capability information of the access network comprises at least one of a coverage capability and a load capability.

23. The service control entity according to claim 20, wherein
the processing module is further configured to: obtain a first flight zone and capability information of an access network; and determine the at least one trajectory based on the at least one of the destination of the terminal, the departure point of the terminal, and the communication requirement of the terminal that are carried in the first request, the capability information of the access network, and the first flight zone.

24. The service control entity according to claim 21, wherein
the receiving module is further configured to receive the first request sent by an uncrewed aerial vehicle server, wherein the first request comprises the first flight zone.

25. The service control entity according to any one of claims 20 and 21, wherein the first request further comprises a preset trajectory; and
the processing module is further configured to: determine whether the preset trajectory meets a flight requirement; and determine the at least one trajectory when the preset trajectory does not meet the flight requirement.

26. A network management entity, wherein the network management entity comprises:
a receiving module, configured to receive a first request, wherein the first request comprises at least one of a destination of a terminal, a departure point of the terminal, and a communication requirement of the terminal;
a processing module, configured to determine at least one trajectory; and
a sending module, configured to send the at least one trajectory, wherein the at least one trajectory is used to indicate a trajectory of the terminal.

27. The network management entity according to claim 26, wherein
the processing module is further configured to determine the at least one trajectory based on the at least one of the destination of the terminal, the departure point of the terminal, and the communication requirement of the terminal that are carried in the first request, and capability information of the access network.

28. The network management entity according to claim 26, wherein
the processing module is further configured to: obtain a first flight zone and capability information of an access network; and determine the at least one trajectory based on the at least one of the destination of the terminal, the departure point of the terminal, and the communication requirement of the terminal that are carried in the first request, the capability information of the access network, and the first flight zone.

29. An uncrewed aerial vehicle server, wherein the uncrewed aerial vehicle server comprises:
a receiving module, configured to receive a first request, wherein the first request comprises at least one of a destination of a terminal, a departure point of the terminal, and a communication requirement of the terminal;
a sending module, configured to send a first message, wherein the first message is used to determine at least one trajectory.

30. The uncrewed aerial vehicle server according to claim 29, wherein
the sending module is further configured to send the first message to a service control entity, wherein the first message is used to indicate the service control entity to determine the at least one trajectory;
the sending module is further configured to send the first message to a service control entity via a capability exposure network element, wherein the first message is used to indicate the service control entity to determine the at least one trajectory;
the sending module is further configured to send the first message to a network management entity, wherein the first message is used to indicate the network management entity to determine the at least one trajectory; or
the sending module is further configured to send the first message to a network management entity via a service control entity, wherein the first message is used to indicate the network management entity to determine the at least one trajectory.

31. The uncrewed aerial vehicle server according to claim 29 or 30, wherein the uncrewed aerial vehicle server further comprises:
a processing module, configured to: obtain a second flight zone; and determine a first flight zone based on the at least one of the destination of the terminal, the departure point of the terminal, and the communication requirement of the terminal that are carried in the first request, and the second flight zone, wherein the first flight zone is comprised in the second flight zone.

32. The uncrewed aerial vehicle server according to claim 31, wherein the first message comprises the first flight zone.

33. A terminal, wherein the terminal comprises:
a sending module, configured to send a first request, wherein the first request comprises at least one of a destination of the terminal, a departure point of the terminal, and a communication requirement of the terminal, and the first request is used to indicate a service control entity, an uncrewed aerial vehicle server, or a network management entity to determine at least one trajectory; and
a receiving module, configured to receive a first message, wherein the first message comprises the at least one trajectory.

34. The terminal according to claim 33, wherein
the sending module is further configured to send the first request to the service control entity via a mobility management entity, wherein the first request is used to indicate the service control entity to determine the at least one trajectory.

35. The terminal according to claim 33, wherein
the sending module is further configured to send the first request to the service control entity via the uncrewed aerial vehicle server, wherein the first request is used to indicate the service control entity to determine the at least one trajectory.

36. The terminal according to any one of claims 33 to 35, wherein the terminal further comprises:
a processing module, configured to select one trajectory from the at least one trajectory.

37. The terminal according to claim 36, wherein
the processing module is configured to: obtain a length of each trajectory in the at least one trajectory; and select a trajectory with a shortest length from the at least one trajectory.

38. The terminal according to any one of claims 33 to 35, wherein
the sending module is further configured to: when none of the at least one trajectory can meet a flight requirement of the terminal, send a second message to the service control entity, the uncrewed aerial vehicle server, or the network management entity, wherein the second message is used to notify the service control entity, the uncrewed aerial vehicle server, or the network management entity that selection of one trajectory from the at least one trajectory fails.

39. A service control entity, comprising a memory, a communications bus, and a processor, wherein the memory is configured to store program code, and the processor is configured to invoke the program code to perform the method according to any one of claims 1 to 6.

40. A network management entity, comprising a memory, a communications bus, and a processor, wherein the memory is configured to store program code, and the processor is configured to invoke the program code to perform the method according to any one of claims 7 to 10.

41. An uncrewed aerial vehicle server, comprising a memory, a communications bus, and a processor, wherein the memory is configured to store program code, and the processor is configured to invoke the program code to perform the method according to any one of claims 11 to 13.

42. A terminal, comprising a memory, a communications bus, and a processor, wherein the memory is configured to store program code, and the processor is configured to invoke the program code to perform the method according to any one of claims 14 to 19.

43. A computer-readable storage medium, wherein the computer-readable storage medium stores instructions, and when the instructions are run on a computer, the computer is enabled to perform the method according to any one of claims 1 to 19.

44. A computer program product comprising instructions, wherein when the computer program product runs on a computer, the computer is enabled to perform the method according to any one of claims 1 to 19.
